# DEMANDE DE BREVET EUROPEEN

(11) **EP 4 617 312 A1**
(43) Date de publication de la demande: **17.09.2025**
(21) Numéro de dépôt: 25163191.7
(22) Date de dépôt: 12.03.2025
(51) Int. Cl.: C08L 23/10

(54) **COMPOSITION ÉLASTOMÈRE THERMOPLASTIQUE ET ARTICLE L INCORPORANT, PAR EXEMPLE UN TUYAU**

(30) Priorité: 13.03.2024 FR 2402517
(71) Demandeur: HUTCHINSON, 75008 Paris (FR)
(72) Inventeur: FOREST, Charlène, 45700 VIMORY (FR); TAILLEBOIS, Fabien, 45120 CEPOY (FR)
(74) Mandataire: Plasseraud IP

(57) **Abrégé**

L'invention concerne une composition élastomère thermoplastique en particulier utilisable dans un tuyau monocouche (1) ou multicouche, et un article élastomère ou composite élastomère-textile ou métal qui incorpore la composition.

La composition comprend :
(i) au moins un élastomère,
(ii) au moins une polyoléfine comprenant une partie polyoléfinique recyclée et optionnellement une partie polyoléfinique vierge,
(iii) une charge renforçante,
(iv) un système plastifiant, et
(v) un système antioxydant,
Selon l'invention, la composition comprend, en fractions massiques :
- plus de 35 % de ladite au moins une polyoléfine, et
- moins de 30 % dudit système plastifiant.

## Description

### Domaine technique

L'invention concerne une composition élastomère thermoplastique en particulier utilisable dans un tuyau monocouche ou multicouche, et un article élastomère ou bien composite élastomère-textile ou métal qui incorpore cette composition. L'invention s'applique notamment à un tuyau monocouche ou mulitcouche par exemple pour un circuit de refroidissement d'une batterie ou d'un moteur électrique d'un véhicule automobile hybride ou électrique, étant précisé que l'invention concerne d'une manière générale tout article élastomère ou composite comprenant un matériau élastomère (incluant des joints d'étanchéité, des dispositifs antivibratoires et tout autre élément élastomère par exemple pour pack de batterie ou pour centre de traitement de données, à titre non limitatif) qui est susceptible d'équiper un véhicule terrestre (automobile ou ferroviaire), aquatique, aérien ou spatial, ainsi que toute installation industrielle ou d'habitation.

### Technique antérieure

De manière connue, un tuyau pour circuit de refroidissement de véhicule automobile est le plus souvent à base de caoutchouc(s), et peut être de type :
- monocouche, comme par exemple dans le document FR 3 130 922 A1 au nom de la Demanderesse qui présente un tuyau sans armature de renforcement pour véhiculer un fluide de refroidissement à au plus 2,5. 10⁵ Pa et au plus 110° C, constitué d'une couche de caoutchouc à base d'un terpolymère éthylène-propylène-diène (EPDM), ou
- le plus souvent multicouche, comprenant une couche interne en caoutchouc conçue pour être en contact avec le fluide de refroidissement, une armature de renforcement e.g. textile surmontant la couche interne, et au moins une couche externe en caoutchouc surmontant l'armature, comme dans le document US 11 833 787 B2 au nom de la Demanderesse qui décrit une couche interne à base d'un EPDM, une armature de renforcement textile, une couche externe à base d'un caoutchouc éthylène-acétate de vinyle (EVA) et une couche intermédiaire à base d'un mélange de caoutchouc EPDM avec un caoutchouc EVA ou avec un caoutchouc acrylique de type polyacrylate (ACM) ou polyacrylate d'éthylène (AEM).

On a récemment cherché à utiliser des élastomères thermoplastiques (TPE) à la place des caoutchoucs précités pour fabriquer des tuyaux véhiculant des liquides, comme par exemple décrit dans le document WO 2022/234351 A1 qui divulgue, pour fabriquer au moins une couche d'un tuyau renforcé ou spiralé, l'utilisation d'un TPE constitué de :
(A) 30-80 % en poids d'une matrice polymérique constituée de 10-35 % d'une première partie thermoplastique (A1) et de 20-45 % d'une seconde partie élastomère (A2) présentes dans le TPE ;
(B) 30-55 % en poids d'au moins un agent plastifiant ;
(C) 0-30 % en poids d'au moins une charge ;
(D) 0-10 % en poids d'au moins un additif ;
le TPE présentant une dureté Shore A de 50-85, un taux massique de matériau recyclé PCR (« PCR » pour post-consommateur) supérieur ou égal à 50 %, et le TPE étant présent au moins à 90 % par rapport au poids total du tuyau.

Un inconvénient majeur des tuyaux présentés dans WO 2022/234351 A1 réside dans le fait qu'ils sont spécifiquement conçus pour former des tuyaux d'irrigation, d'arrosage ou de transport d'eau dans un piscine ou un spa, et ne sont pas adaptés aux conditions de fonctionnement d'un circuit de refroidissement d'un moteur électrique ou d'une batterie de véhicule automobile (voir notamment les TPE-S et TPV respectivement testés aux tableaux 3 et 6 de WO 2022/234351 A1, dépourvus de charge renforçante telle que du noir de carbone, qui présentent des valeurs de contrainte à la rupture nettement inférieures aux minima requis pour des tuyaux monocouches pour un tel circuit de refroidissement).

En effet, un tel circuit de refroidissement requiert une résistance à la fois mécanique et chimique du tuyau à sa dégradation électrochimique au contact du liquide de refroidissement sous pression (usuellement de type eau glycolée) et de son environnement extérieur (usuellement de l'air chaud), ces exigences devant caractériser la même couche dans le cas d'un tuyau monocouche. En particulier, un tuyau pour ce circuit de refroidissement doit présenter des propriétés à la rupture demeurant satisfaisantes, même après un vieillissement thermique de longue durée au contact d'air et d'eau glycolée.

Un autre inconvénient des tuyaux présentés dans WO 2022/234351 A1 réside dans leur quantité relativement élevée de plastifiant utilisée.

### Exposé de l'invention

Un but de la présente invention est de proposer une composition élastomère thermoplastique notamment apte à constituer un tuyau monocouche pour un circuit de refroidissement d'une batterie ou d'un moteur électrique d'un véhicule automobile électrique ou hybride, le tuyau remédiant notamment aux inconvénients précités sans pénaliser son aptitude à la mise en œuvre par extrusion, ni ses propriétés rhéologiques, et présentant des propriétés mécaniques et de résistance à un vieillissement thermique sous eau glycolée et sous air suffisantes pour être capable de résister chimiquement et mécaniquement à des conditions prolongées de température et de pression adaptées à la circulation d'un liquide de refroidissement.

Ce but est atteint en ce que la Demanderesse a découvert d'une manière inattendue que si l'on combine, dans une composition élastomère thermoplastique, un élastomère à une quantité suffisamment élevée d'une polyoléfine comprenant une partie recyclée en présence d'une quantité suffisamment réduite d'un système plastifiant, alors on peut obtenir une composition qui, via une charge renforçante et un système antioxydant, est particulièrement bien adaptée pour former un tuyau monocouche ou une couche interne et/ou externe de tuyau multicouche pour le circuit de refroidissement précité, présentant notamment des propriétés rhéologiques, d'extrudabilité, de flexibilité et des propriétés mécaniques à la rupture satisfaisantes même après ledit vieillissement thermique sous eau glycolée et sous air, et de ce fait une tenue dynamique durablement satisfaisante dans ce circuit de refroidissement.

Plus précisément, une composition élastomère thermoplastique selon l'invention comprend :
(i) au moins un élastomère,
(ii) au moins une polyoléfine comprenant une partie polyoléfinique recyclée et optionnellement une partie polyoléfinique vierge,
(iii) une charge renforçante,
(iv) un système plastifiant, et
(v) un système antioxydant,
et ladite composition comprend, en fractions massiques :
- plus de 35 % de ladite au moins une polyoléfine, et
- moins de 30 % dudit système plastifiant.

On notera que cette combinaison de quantités élevées et au contraire réduites respectivement pour la polyoléfine au moins en partie recyclée et pour le système plastifiant, qui va à l'encontre du préjugé technique pour une personne du métier que représente l'enseignement précité de WO 2022/234351 A1, permet de manière particulièrement avantageuse de conférer à la composition extrudée à la fois des propriétés rhéologiques, d'extrudabilité et en outre des propriétés mécaniques satisfaisantes qui peuvent même être améliorées après vieillissement thermique, en comparaison des propriétés mécaniques d'une composition élastomère thermoplastique de référence présentant une formulation analogue mais dont ladite au moins une polyoléfine est entièrement vierge (i.e. n'est pas au moins en partie recyclée).

Il en résulte qu'une composition selon l'invention est ainsi particulièrement bien adaptée pour constituer non seulement un tuyau monocouche et une couche interne et/ou une couche externe d'un tuyau multicouche, mais en outre un joint d'étanchéité ou un dispositif antivibratoire, à titre exemplatif et nullement limitatif.

On notera également qu'une composition élastomère thermoplastique selon l'invention, qui se différencie des compositions de caoutchouc communément utilisées pour les tuyaux de circuits de refroidissement, notamment, présente l'avantage d'être aisément mis en forme (e.g. par extrusion) tout comme une composition thermoplastique.

### Description détaillée

Par « composition élastomère thermoplastique », on entend dans la présente description un matériau TPE appartenant de préférence à la famille des vulcanisats thermoplastiques (TPV), même si sont utilisables en variante :
- des TPE oléfiniques non vulcanisés (TPE-O ou TPO) par exemple issus d'une ou plusieurs polyoléfine(s) (e.g. des polyéthylènes et propylènes) et d'un élastomère diénique ou non (e.g. choisi parmi des EPDM, des copolymères d'éthylène et d'au moins une alpha-oléfine linéaire ou ramifiée ayant de 3 à 20 atomes de carbone, comme par exemple des copolymères EPM d'éthylène-propylène ou des copolymères POE d'éthylène-octène), ou même
- certains TPE styréniques (TPE-S ou TPS) issus d'oléfines (telles que l'éthylène, le propylène ou le butylène) pour des TPS e.g. à blocs SEBS pour polystyrène-b-poly(éthylène-butylène)-b-polystyrène, SEPS pour polystyrène-b-poly(éthylène-propylène)-b-polystyrène, ou SEEPS pour polystyrène-b-poly(éthylène-éthylène/propylène)-b-polystyrène.

D'une manière générale, on notera que la combinaison des ingrédients (i) à (v) ci-dessus permet de conférer aux compositions selon l'invention des propriétés mécaniques satisfaisantes incluant des modules sécants, une dureté shore A, une contrainte à la rupture et un allongement à la rupture qui sont chacun suffisamment élevés, ce qui permet de n'utiliser, dans un premier mode de réalisation de l'invention, qu'une couche unique pour former un tuyau monocouche véhiculant un fluide à une pression d'au plus 3,0. 10⁵ Pa et à une température d'au plus 120° C, tel qu'un liquide de refroidissement pour un circuit de refroidissement basse pression et basse température d'une batterie ou d'un moteur électrique d'un véhicule automobile hybride ou électrique. Comme cela sera détaillé ci-dessous, ces propriétés avantageuses d'une composition selon l'invention rendent celle-ci également utilisable dans un tuyau multicouche pouvant incorporer une armature de renfort, selon un deuxième mode de réalisation de l'invention.

A titre d'élastomère(s) utilisable(s) dans une composition selon l'invention de type TPV, on peut citer, à titre non limitatif, des élastomères diéniques ou non selon une fraction massique d'élastomère(s) dans la composition inclusivement comprise entre 10 % et 40 %, les élastomères étant de préférence choisis parmi :
- des EPDM,
- des homopolymères ou copolymères du butadiène et/ou de l'isoprène (e.g. polybutadiène BR, polyisoprène IR) et optionnellement en outre d'un comonomère vinylaromatique (e.g. le styrène pour un SBR), acrylonitrile (e.g. pour un caoutchouc NBR) ou alpha-oléfine ramifiée telle que l'isobutylène (e.g. pour un caoutchouc butyle IIR),
- des copolymères d'éthylène et d'au moins une alpha-oléfine linéaire ou ramifiée ayant de 3 à 20 atomes de carbone, comme par exemple des EPM ou des POE, et
- des caoutchoucs acryliques de type polyacrylates (ACM) ou polyacrylates d'éthylène (AEM).

Avantageusement, à titre d'élastomère utilisable dans une composition selon l'invention de type TPV, on peut utiliser un interpolymère de l'éthylène (copolymère ou terpolymère, e.g. un EPDM, EPM, POE ou AEM) dont l'éthylène est biosourcé, étant par exemple d'origine végétale (e.g. issu du sucre de canne).

Selon un exemple préférentiel d'une composition selon l'invention de type TPV, on utilise à titre d'élastomère au moins un EPDM, la fraction massique dudit au moins un élastomère dans la composition étant alors inclusivement comprise entre 15 % et 25 %. De plus, ledit au moins un EPDM est alors avantageusement non étendu à l'huile, et peut présenter :
- des taux massiques d'unités issues de l'éthylène de 40-50 %, d'un diène non conjugué (tel que l'éthylidène norbornène, ENB) de 8-10%, et de préférence
- une viscosité Mooney ML(1+4) à 125° C comprise entre 55 et 70.

Avantageusement, une composition selon l'invention de type TPE (i.e. incluant des TPS, TPO et TPV) peut comprendre ladite partie polyoléfinique recyclée selon une fraction massique supérieure à 25 %, de préférence inclusivement comprise entre 28 % et 50 %, par exemple entre 30 % et 45 %.

Par « partie polyoléfinique recyclée » d'une composition selon l'invention de type TPE (e.g. TPS, TPO ou TPV), on entend dans la présente description un ou plusieurs polyoléfines qui sont chacune non vierges, i.e. qui sont chacune issues d'un recyclage de type « PIR » ou « PCR » (i.e. d'un matériau polyoléfinique recyclé de type post-industriel (PIR) ou post-consommation (PCR)), ou chacune issues d'un broyage suivi d'une régénération dans une extrudeuse par exemple bi-vis.

On notera que ladite au moins une polyoléfine d'une composition selon l'invention de type TPE (e.g. TPS, TPO ou TPV) peut comprendre ladite partie polyoléfinique vierge selon une fraction massique dans la composition inclusivement comprise entre 0 % et 50 %, de préférence supérieure à 0 % et inférieure ou égale à 40 %, en fonction du procédé de recyclage ou régénération mis en œuvre pour obtenir ladite partie polyoléfinique recyclée. En outre, ladite partie polyoléfinique vierge peut comprendre la même polyoléfine que ladite partie polyoléfinique recyclée, ou bien une autre polyoléfine.

Avantageusement, une composition selon l'invention de type TPE (e.g. TPS, TPO ou TPV) peut comprendre ladite partie polyoléfinique vierge selon une fraction massique supérieure à 10 %, de préférence inclusivement comprise entre 15 % et 35 %.

Également avantageusement, une composition selon l'invention de type TPE (e.g. TPS, TPO ou TPV) peut comprendre ladite partie polyoléfinique recyclée et ladite partie polyoléfinique vierge selon une fraction massique totale inclusivement comprise entre 40 % et 70 %, de préférence entre 50% et 68 %, par exemple entre 55 % et 65 %.

Selon une autre caractéristique générale d'une composition selon l'invention de type TPE (e.g. TPS, TPO ou TPV), ladite au moins une polyoléfine peut comprendre un homopolymère ou interpolymère (e.g. copolymère statistique, segmenté ou à blocs) d'au moins une alpha-oléfine aliphatique ou alicyclique (telle que le propylène ou le butylène, à titre non limitatif), incluant un interpolymère de l'éthylène et d'au moins une alpha-oléfine, par exemple le propylène.

Selon un exemple de réalisation d'une composition selon l'invention de type TPE (e.g. TPS, TPO ou TPV), ladite partie polyoléfinique recyclée et optionnellement ladite partie polyoléfinique vierge incluse(s) dans ladite au moins une polyoléfine comprennent chacune, indépendamment l'une de l'autre, un homopolymère ou un copolymère du propylène, de préférence un homopolymère ou un copolymère de propylène recyclé issu d'un matériau polyoléfinique recyclé de type PIR ou PCR, ou un matériau polyoléfinique régénéré. Par exemple, ladite au moins une polyoléfine comprend :
- un homopolymère ou copolymère du propylène (PP) recyclé, selon une fraction massique dans ladite au moins une polyoléfine inclusivement comprise entre 50 % et 100 %, pouvant être égale ou supérieure à 75 % et inférieure à 100 %, et
- un homopolymère ou copolymère du propylène (PP) vierge, selon une fraction massique dans ladite au moins une polyoléfine inclusivement comprise entre 0 % et 50 %, pouvant être supérieure à 0 % et inférieure ou égale à 25 %.

Selon un exemple encore plus préférentiel d'une composition selon l'invention de type TPV, on utilise à titre d'élastomère au moins un EPDM et, à titre de polyoléfine, au moins un homopolymère du propylène (PP), avec dans ce cas :
- la fraction massique dudit au moins un EPDM dans la composition inclusivement comprise entre 15 % et 25 %, par exemple entre 17 % et 22 %, et/ou
- la fraction massique du PP recyclé inclusivement comprise entre 28 % et 50 %, par exemple entre 30 % et 45 %, et/ou
- la fraction massique du PP vierge inclusivement comprise entre 15 % et 35 %, par exemple entre 17 % et 32 %, et/ou
- la fraction massique totale de PP recyclé et de PP vierge inclusivement comprise entre 40 % et 70 %, par exemple entre 50% et 68 %.

Par « charge renforçante », on entend de manière générale dans la présente description une ou plusieurs charges individuelles de grades renforçants pour un élastomère, qui sont de préférence constituées en tout ou partie d'un noir de carbone renforçant et qui sont dispersées de manière homogène dans la composition, étant précisé que la charge renforçante peut comprendre en outre une charge organique autre qu'un noir de carbone (e.g. un graphite) et optionnellement en outre une charge inorganique, telle qu'une silice ou une autre charge claire.

Avantageusement, ladite charge renforçante peut comprendre un noir de carbone, qui est optionnellement recyclé au moins en partie et qui est par exemple de série ASTM N500 ou N600, le noir de carbone étant présent dans la composition de type TPE (e.g. TPS, TPO ou TPV) selon une fraction massique inclusivement comprise entre 1 % et 15%, de préférence entre 4 % et 10 %.

On notera que cette quantité de noir de carbone relativement réduite dans la composition permet notamment de conférer à un tuyau monocouche constitué de cette composition un compromis entre une résistivité relativement élevée et un renforcement suffisant, et de ce fait de minimiser la dégradation électrochimique du tuyau au contact du fluide qu'il véhicule lorsque ce fluide est un liquide de refroidissement de type eau glycolée, sans pénaliser la résistance du tuyau à son environnement extérieur.

Selon une autre caractéristique générale d'une composition selon l'invention de type TPE (e.g. TPS, TPO ou TPV) en référence à l'une quelconque des caractéristiques susmentionnées, la composition peut comprendre :
- ledit système plastifiant selon une fraction massique inclusivement comprise entre 3 % et 25 %, de préférence entre 4 % et 15 % et par exemple entre 5 % et 12 %,
- de préférence avec une fraction massique de noir de carbone dans la composition inclusivement comprise entre 1 % et 15%, par exemple entre 4 % et 10 %.

A titre de système plastifiant selon l'invention, on peut utiliser au moins une huile plastifiante et/ou au moins une résine plastifiante, étant précisé que ledit système plastifiant comprend de préférence au moins une huile plastifiante choisie parmi les huiles minérales, les huiles biosourcées issues de la biomasse (incluant les huiles végétales modifiées ou non), et leurs mélanges.

A titre encore plus préférentiel, on utilise à titre de système plastifiant au moins une huile plastifiante choisie parmi des huiles minérales paraffiniques, naphténiques et aromatiques, e.g. une huile minérale au moins en partie naphténique (pouvant comprendre à la fois des fractions paraffiniques, naphténiques et aromatiques).

On notera que ledit système plastifiant utilisé selon la fraction massique précitée réduite selon l'invention, en comparaison des fractions massiques nettement plus élevées conventionnellement utilisées dans les tuyaux, rend néanmoins les compositions de l'invention présentant les caractéristiques susmentionnées aptes à être mise en œuvre par mélangeage puis extrusion, ou uniquement par extrusion réactive.

Selon une autre caractéristique générale de l'invention, la composition, dans le cas où elle est de type TPV, comprend un système de réticulation qui est dépourvu de résine phénolique et d'oxyde de zinc (ZnO) et qui comprend de préférence un peroxyde organique à titre d'agent de réticulation et un coagent de réticulation choisi parmi le triallyl cyanurate (TAC), le triallyl isocyanurate (TAIC), et les coagents à base acrylate tels que l'éthylène glycol diméthacrylate (EGDMA).

En variante, une composition selon l'invention de type TPV pourrait comprendre un système de réticulation au soufre, optionnellement en plus d'un agent de réticulation peroxyde.

Ledit système de réticulation d'une composition de TPV selon l'invention permet de réticuler chimiquement cette composition de préférence par extrusion réactive, et en outre, du fait que ce système de réticulation est totalement dépourvu de ZnO, il permet de ne pas d'inhiber le système antirouille utilisé dans le circuit de refroidissement (le ZnO utilisé à titre d'activateur de réticulation dans les compositions de caoutchouc de l'art antérieur est connu pour interagir défavorablement avec ce système antirouille).

De manière générale en référence à l'une quelconque des caractéristiques susmentionnées, ledit système antioxydant d'une composition selon l'invention de type TPV peut avantageusement comprendre :
- un premier antioxydant de préférence aromatique hétérocyclique, par exemple à base de 2,2,4-triméthyl-1,2-dihydroquinoline polymérisée, et
- un deuxième antioxydant à base d'un thioéther, par exemple le distéaryl-disulfure, et de préférence ledit système antioxydant comprend en outre un troisième antioxydant à base d'une amine aromatique.

On notera que ce système antioxydant mixte et de préférence ternaire permet avantageusement de conférer aux compositions TPV selon l'invention des propriétés mécaniques améliorées après un vieillissement thermique sous air et sous eau glycolée, en comparaison des propriétés mécaniques d'une composition TPV de référence de formulation analogue mais dont ladite au moins une polyoléfine est entièrement vierge (i.e. n'est pas au moins en partie recyclée).

Selon d'autres caractéristiques des compositions selon l'invention de type TPV, ces compositions peuvent présenter :
- une phase continue comprenant ladite au moins une polyoléfine, et une phase discontinue comprenant des nodules dudit au moins un élastomère (par exemple au moins un EPDM) qui sont dispersés dans ladite au moins une polyoléfine, et
- une contrainte et un allongement à la rupture, mesurés en traction uni-axiale selon la norme ISO 37:2017 après des vieillissements pendant 3000 h à 120° C au contact d'air et d'eau glycolée, respectivement, qui sont supérieurs à la contrainte et à l'allongement à la rupture de ladite composition TPV de référence où ladite au moins une polyoléfine est par exemple constituée d'un homopolymère de propylène vierge.

Selon un autre aspect général de l'invention en référence à l'une quelconque des caractéristiques susmentionnées, les compositions selon l'invention de type TPE (e.g. TPS, TPO ou TPV) peuvent être préparées par un mélangeage dans un mélangeur interne suivi d'un extrusion bi-vis, ou en variante par une unique étape d'extrusion bi-vis réactive.

Selon un autre aspect général de l'invention en référence à l'une quelconque des caractéristiques susmentionnées, un article élastomère ou bien composite élastomère-textile ou métal selon l'invention comprend ou est constitué d'un extrudat formé d'une composition selon l'invention de type TPE (e.g. TPS, TPO ou TPV), l'article étant en particulier choisi parmi les tuyaux monocouche, les tuyaux multicouche optionnellement renforcés par une armature textile, les joints d'étanchéité pour véhicules à moteur ou pour bâtiments, les dispositifs antivibratoires et les éléments de support, de calage ou protection pour packs de batterie ou pour centres de traitement de données.

Avantageusement et à titre non limitatif, l'article peut être un tuyau monocouche ou multicouche extrudé pour un circuit de refroidissement d'une batterie ou d'un moteur électrique d'un véhicule automobile électrique ou hybride, de préférence un tuyau monocouche qui est constitué de ladite composition de type TPE (e.g. TPS, TPO ou TPV) et qui est utilisable pour véhiculer un fluide de refroidissement d'une batterie à une pression d'au plus 3,0. 10⁵ Pa et à une température d'au plus 120° C.

Comme expliqué ci-dessus, les propriétés mécaniques de la composition TPE et par conséquent du tuyau monocouche qui peut en être constitué sont suffisantes pour qu'il véhicule avec une bonne tenue dynamique un liquide de refroidissement à ces conditions de température et de pression. Les tuyaux monocouches selon ledit premier mode de l'invention peuvent ainsi présenter des diamètres internes et externes réduits en comparaison des tuyaux renforcés de l'art antérieur, qui apparaissent en conséquence surdimensionnés pour un circuit basse pression et basse température. Il en résulte que les tuyaux selon ledit premier mode de l'invention présentent un coût de fabrication significativement réduit par rapport aux tuyaux renforcés connus pour des circuits de refroidissement automobiles.

Un tuyau selon un deuxième mode de réalisation de l'invention est de type multicouche, comprenant une couche radialement interne, une couche radialement externe et optionnellement une armature de renfort (e.g. textile ou métallique), avec la couche interne et/ou la couche externe qui sont constituées d'une composition selon l'invention de type TPE (e.g. TPS, TPO ou TPV) telle que définie ci-dessus, en référence à l'une quelconque des caractéristiques susmentionnées.

A titre d'armature de renfort, on peut utiliser au moins une armature de renforcement textile ou non surmontant la couche interne (e.g. une armature formée de fils tricotés, tressés ou guipés par exemple en PET, aramide ou rayonne).

Un tuyau selon ledit deuxième mode de l'invention peut être utilisé pour le transfert d'un fluide liquide, gazeux ou supercritique à une pression pouvant être supérieure à 3. 10⁵ Pa et/ou à une température pouvant être supérieure à 120° C.

On notera qu'un tuyau selon ce deuxième mode de l'invention peut comprendre en outre une couche barrière en un matériau plastique, à base d'au moins un polymère thermoplastique. Cette couche barrière peut former la couche la plus radialement interne du tuyau, ou bien un « entrepli » entre le tube interne et une couche de renforcement ou entre le tube interne et une couche intermédiaire.

Un circuit de fluide selon l'invention, en particulier de refroidissement d'une batterie ou d'un moteur électrique pour véhicule automobile hybride ou électrique, comprend une pluralité de tuyaux monocouche et/ou multicouche montés sur des connecteurs par exemple thermoplastiques, et il peut être caractérisé en ce que l'un au moins (et de préférence chacun) des tuyaux est tel que défini ci-dessus.

Par l'expression « à base de », on entend dans la présente description que la composition ou l'ingrédient considéré comprend majoritairement en poids le constituant concerné, i.e. selon une fraction massique supérieure à 50 %, de préférence supérieure à 75 % et pouvant aller jusqu'à 100 %.

L'invention concerne également une composition élastomère thermoplastique, en particulier utilisable dans un tuyau monocouche (1) ou multicouche (10, 20, 30, 40) d'un circuit de refroidissement d'une batterie ou d'un moteur électrique d'un véhicule automobile électrique ou hybride, la composition comprenant :
(i) au moins un élastomère,
(ii) au moins une polyoléfine comprenant
   une partie polyoléfinique recyclée issue d'un matériau polyoléfinique post-industriel (PIR) ou post-consommation (PCR), ou d'un broyage suivi d'une régénération d'un matériau polyoléfinique dans une extrudeuse, et optionnellement une partie polyoléfinique vierge,
(iii) une charge renforçante comprenant un noir de carbone,
(iv) un système plastifiant comprenant au moins une huile plastifiante et/ou au moins une résine plastifiante, et
(v) un système antioxydant comprenant plusieurs antioxydants, dont un antioxydant à base d'un thioéther,
dans laquelle la composition comprend, en fractions massiques :
- plus de 35 % de ladite au moins une polyoléfine, et
- moins de 30 % dudit système plastifiant.

### Brève description des dessins

D'autres caractéristiques, avantages et détails de l'invention ressortiront à la lecture de la description suivante de plusieurs exemples de réalisation de l'invention, donnés à titre illustratif en relation avec les dessins joints, parmi lesquels :
**Fig. 1**

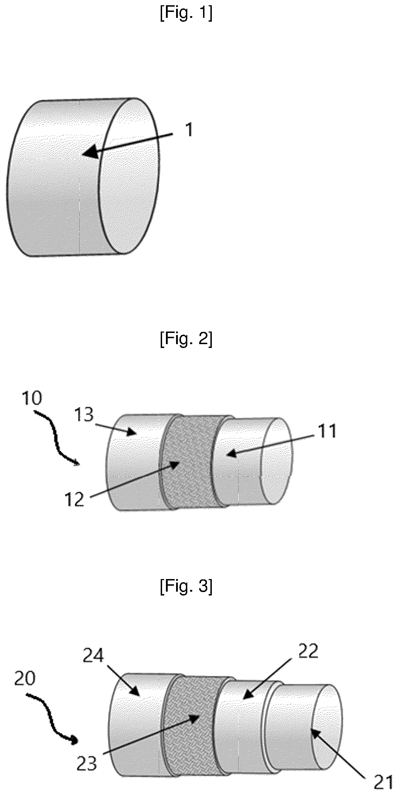

   [fig. 1] est une vue schématique latérale et en perspective d'un tuyau monocouche selon l'invention.
**Fig. 2**
   [fig. 2] est une vue schématique latérale et en perspective avec arrachements partiels d'un tuyau multicouche selon un exemple de l'invention.
**Fig. 3**
   [fig. 3] est une vue schématique latérale et en perspective avec arrachements partiels d'un tuyau multicouche selon un autre exemple de l'invention.
**Fig. 4**

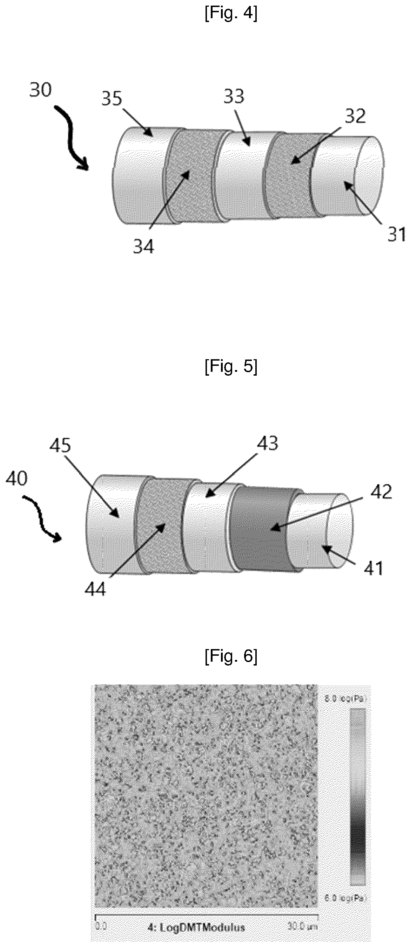

   [fig. 4] est une vue schématique latérale et en perspective avec arrachements partiels d'un tuyau multicouche selon un autre exemple de l'invention.
**Fig. 5**
   [fig. 5] est une vue schématique latérale et en perspective avec arrachements partiels d'un tuyau multicouche selon un autre exemple de l'invention.
**Fig. 6**
   [fig. 6] est un cliché au microscope à force atomique (MFA) illustrant la morphologie d'une composition de référence non conforme à l'invention.
**Fig. 7**

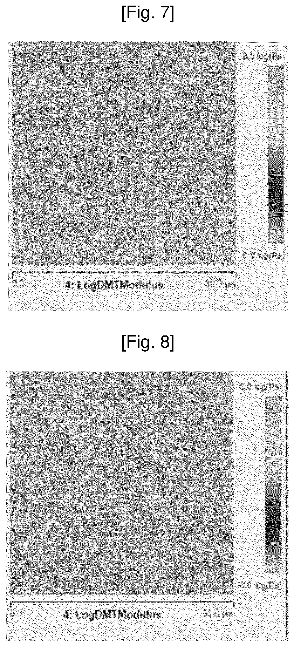

   [fig. 7] est un cliché MFA illustrant la morphologie d'une première composition selon l'invention.
**Fig. 8**
   [fig. 8] est un cliché MFA illustrant la morphologie d'une deuxième composition selon l'invention.
**Fig. 9**

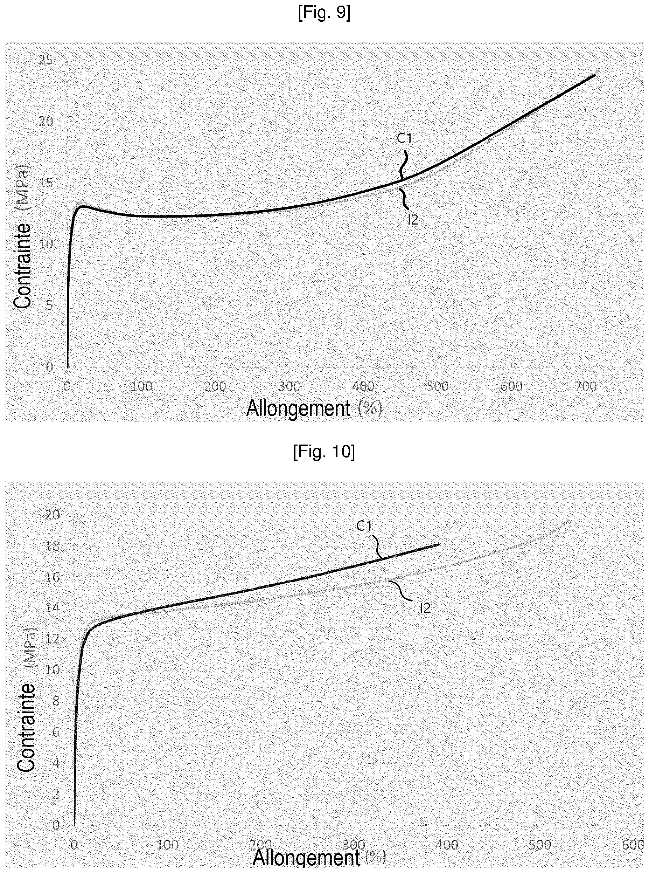

   [Fig. 9] est un graphique contrainte-déformation, avant vieillissement, de ladite composition de référence et de ladite deuxième composition selon l'invention.
**Fig. 10**
   [Fig. 10] est un graphique contrainte-déformation après vieillissement thermique dans de l'eau glycolée, de ladite composition de référence et de ladite deuxième composition selon l'invention.
**Fig. 11**

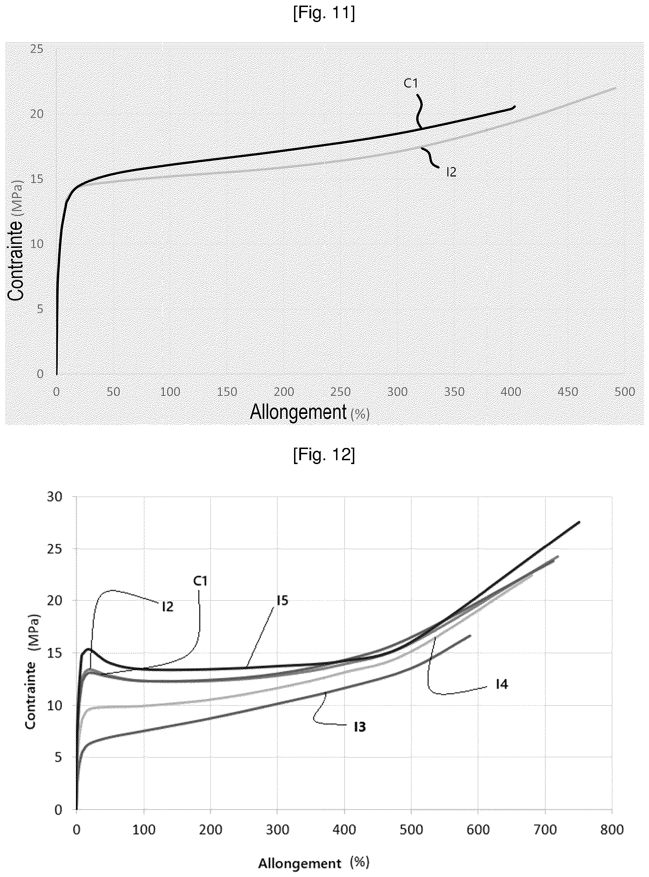

   [Fig. 11] est un graphique contrainte-déformation après vieillissement thermique à l'air, de ladite composition de référence et de ladite deuxième composition selon l'invention.
**Fig. 12**
   [Fig. 12] est un graphique contrainte-déformation, avant vieillissement, de ladite composition de référence et de compositions selon l'invention.

### Exemples de réalisation de l'invention

Le tuyau 1 monocouche de la figure 1 est apte à véhiculer un fluide tel qu'un liquide de refroidissement, à une pression d'au plus 3. 10⁵ Pa et une température d'au plus 120° C, et il peut être assemblé à deux connecteurs par exemple thermoplastiques. Ce tuyau 1 est constitué d'une composition TPE selon l'invention (e.g. TPS, TPO ou TPV) telle que définie ci-dessus.

Le tuyau multicouche 10 de la figure 2 est apte à véhiculer tout fluide tel que ceux précités, à une pression pouvant être égale ou supérieure à 3. 10⁵ Pa, et il comprend un tube radialement interne 11, une couche de renforcement 12 et une couche de couverture radialement externe 13, étant précisé que l'un au moins du tube 11 et de la couche de couverture 13 est constitué d'une composition TPE selon l'invention (e.g. TPS, TPO ou TPV) telle que définie ci-dessus.

La couche de renforcement 12 peut comprendre, à titre non limitatif, un tricot, tresse ou guipe à base de fils multifilamentaires réalisés en un ou plusieurs matériau(x) textile(s), par exemple en un polyamide (e.g. en aramide), polyester (e.g. en PET) ou en rayonne (le terme « fil » désignant de manière usuelle aussi bien un filé à base d'une multitude de filaments élémentaires de faible diamètre qui sont tordus ensemble, qu'un retors obtenu par torsion de plusieurs filés).

Le tuyau multicouche 20 de la figure 3 se distingue de celui de la figure 2, en ce que le tube interne 21 est surmonté d'une couche intermédiaire 22 elle-même surmontée d'une couche de renforcement 23 recouverte d'une couche de couverture 24, étant précisé que l'un au moins du tube 21 et de la couche de couverture 24 est constitué d'une composition TPE selon l'invention.

Le tuyau multicouche 30 de la figure 4 se distingue de celui de la figure 3, en ce que le tube interne 31 est surmonté d'une couche de renforcement interne 32 elle-même surmontée d'une couche intermédiaire 33 recouverte d'une couche de renforcement externe 34 puis d'une couche de couverture 35, étant précisé que l'un au moins du tube 31, de la couche intermédiaire 33 et de la couche de couverture 35 est constitué d'une composition TPE selon l'invention.

Le tuyau multicouche 40 de la figure 5 se distingue de celui de la figure 3, en ce que le tube interne 41 est surmonté d'une couche barrière 42 en matière plastique formant un entrepli, puis d'une couche intermédiaire 43 recouverte d'une couche de renforcement 44, elle-même surmontée d'une couche de couverture 45, étant précisé que l'un au moins du tube 41, de la couche intermédiaire 43 et de la couche de couverture 45 est constitué d'une composition TPE selon l'invention.

On notera qu'un tuyau multicouche selon l'invention pourrait comprendre un arrangement de couches différant de ceux illustrés aux figures 2-5, tant par le nombre de ses couches que par leurs fonctions respectives.

### Préparation de la composition de référence C1, de la première composition selon l'invention 11 et de la deuxième composition selon l'invention 12 :

On a préparé trois compositions de vulcanisats thermoplastiques (TPV) formant respectivement la composition de référence C1 et les première et deuxième compositions selon l'invention I1 et I2, par exemple aptes à constituer un tuyau monocouche pour circuit de refroidissement, en mettant en œuvre le procédé de préparation suivant.

On a dans un premier temps mis en œuvre une étape de mélangeage en mélangeur interne, avec incorporation des ingrédients recensés ci-dessous au cycle de mélangeage (d'abord l'élastomère, la polyoléfine, les agents de mise en œuvre et le système plastifiant, puis le système de réticulation et enfin le système antioxydant en fin de cycle), avec une montée en température du fait du cisaillement jusqu'à un plateau de 200° C pendant 8 minutes.

On a dans un second temps mis en œuvre une étape d'extrusion dans une extrudeuse bi-vis à 190°C du mélange récupéré.

On a ensuite façonné chacune des trois compositions C1, I1 et I2 de TPV ainsi obtenues sous forme d'éprouvettes de type haltères de taille H2 pour procéder aux mesures des propriétés mécaniques à l'état réticulé (courbes contraintes/ déformations et propriétés à la rupture en résultant). On a ainsi mesuré ces propriétés en traction uni-axiale à 23° C selon la norme ISO 37:2017 à l'état initial, puis après deux types de vieillissements thermiques.

Le tableau 1 suivant détaille la formulation de la composition C1 (en parties en poids de chaque ingrédient dans la composition) ainsi préparée.

**[Tableau 1]**

| **Ingrédients** | | | **C1** |
|---|---|---|---|
| EPDM à taux massiques d'éthylène de 44 %, d'ENB de 9 %, et à ML(1+4) à 125° C de 63 | | | 60 |
| Polypropylène : « PPH3060 » | | | 170 |
| Agent réticulant : résine alkylphénol formaldéhyde | | | 4 |
| Activateur : ZnO | | | 3 |
| Agents de mise en œuvre | PEG | | 5 |
| | Acide stéarique | | 0,5 |
| | Acides gras | | 1 |
| | lubrifiant | | 1 |
| Noir de carbone : de série ASTM N500 | | | 22 |
| Plastifiant : huile minérale de formule [Chem. 1] ci-dessous | | | 24,8 |
| Antioxydant | | amine aromatique de formule [Chem. 2] ci-dessous | 1,5 |
| | | alkyl-dihydroquinoline | 1 |

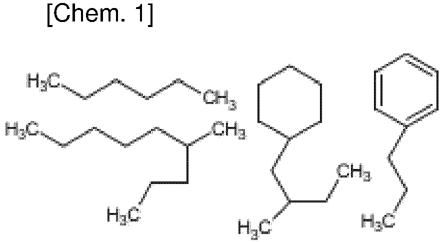

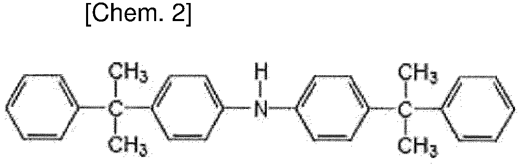

Le tableau 2 suivant détaille la formulation des compositions I1 et I2 (en parties en poids de chaque ingrédient dans la composition) ainsi préparées.

**[Tableau 2]**

| **Ingrédients** | | **I1** | **I2** |
|---|---|---|---|
| EPDM à taux massiques d'éthylène de 44 %, d'ENB de 9 %, et à ML(1+4) à 125° C de 63 | | 60 | 60 |
| Polypropylène (PP) à fractions recyclée (rPP) et vierge (vPP): | | 195 | 170 |
| Pour I1 : PIR à 50 % mass. de PP recyclé « PRC50UFO black » | | | |
| Pour I2 : PCR à 70 % mass. de PP recyclé « rPP1002 » | | | |
| Agent réticulant : bis-alkylperoxyde | | 2,4 | 2,4 |
| Co-agent réticulant : à base acrylate | | 1,2 | 1,2 |
| Agent de mise en œuvre : PEG | | 5 | 5 |
| Noir de carbone : de série ASTM N500 | | 22 | 22 |
| Plastifiant : huile minérale de formule [Chem. 1] ci-dessus | | 24,8 | 24,8 |
| Antioxydants | Amine aromatique de formule [Chem. 2] | 1,5 | 1,5 |
| | alkyl-dihydroquinoline | 1 | 1 |
| | Thioéther : distéaryl-disulfure | 1 | 1 |

La composition I1 contient ainsi 195 parties en poids d'un matériau polyoléfinique recyclé post-industriel (i.e. de type « PIR ») de dénomination « PRC50UFO black », comprenant :
- 50 % en poids d'un polypropylène recyclé rPP, comprenant majoritairement en poids un homopolymère ou copolymère du propylène, soit 97,5 parties en poids de rPP, et
- 50 % en poids d'autres ingrédients pouvant comprendre majoritairement en poids un polypropylène vierge vPP (homopolymère ou copolymère du propylène, identique ou différent de celui du rPP), et au moins un additif (tel qu'un antioxydant, par exemple) à l'état de traces, soit 97,5 parties en poids de ces autres ingrédients. Les fractions massiques de rPP et de vPP dans la composition I1 sont donc chacune de 31 % environ, alors que les fractions massiques respectives d'EPDM, de noir de carbone et de plastifiant dans la composition I1 sont respectivement de 19 %, 7 % et 8 %.

La composition I2 contient ainsi 170 parties en poids d'un matériau polyoléfinique recyclé post-consommateur (i.e. de type « PCR ») de dénomination « rPP1002 », comprenant :
- 70 % en poids d'un polypropylène recyclé rPP, comprenant majoritairement en poids un homopolymère ou copolymère du propylène, soit 119 parties en poids de rPP, et
- 30 % en poids d'autres ingrédients pouvant comprendre majoritairement en poids un polypropylène vierge vPP (homopolymère ou copolymère du propylène, identique ou différent de celui du rPP), et au moins un additif (tel qu'un antioxydant, par exemple) à l'état de traces, soit 51 parties en poids de ces autres ingrédients. Les fractions massiques de rPP et de vPP dans la composition I2 sont donc respectivement de 41 % et 18 % environ, alors que les fractions massiques respectives d'EPDM, de noir de carbone et de plastifiant dans la composition I2 sont respectivement de 21 %, 8 % et 9 %.

Comme illustré aux clichés des figures 6-8, les analyses morphologiques au microscope à force atomique (MFA) montrent, pour chacune des trois compositions C1, I1 et I2, que la phase thermoplastique polyoléfinique (PP) est continue et que la phase élastomère (EPDM) présente une structure de nodules élastiques dispersés dans la matrice rigide de cette phase continue polyoléfinique. Ces clichés montrent en outre une réduction de la taille moyenne des nodules élastomères dans les compositions I1 et I2 selon l'invention, en comparaison de la composition C1.

On a vérifié que les propriétés rhéologiques et d'extrudabilité des compositions I1 et I2 selon l'invention étaient analogues à celles de la composition de référence C1.

Et comme indiqué ci-dessus, on a procédé à des essais de traction uni-axiale à 23° C selon la norme ISO 37:2017 d'éprouvettes H2 constituées des compositions C1 et I2, à l'état initial (i.e. avant toute exposition des compositions aux fluides et conditions opératoires caractérisant leur fonctionnement), dont les résultats sont visibles aux courbes contraintes/ déformations de la figure 9.

Comme illustré à la figure 9, on a vérifié que les propriétés mécaniques en traction et en particulier les propriétés à la rupture de la composition I2 étaient analogues à l'état initial à celles de la composition C1 (voir la quasi-superposition des courbes de I2 et C1 des basses aux hautes déformations).

On a ensuite procédé à nouveau à ces essais de traction uni-axiale selon la norme ISO 37:2017 d'éprouvettes H2 constituées des compositions C1 et I2, mais après deux cycles séparés de vieillissements thermiques respectivement au contact d'un liquide de refroidissement constitué d'eau glycolée et au contact d'air.

Comme illustré à la figure 10, après un vieillissement thermique en immersion à 120° C dans un solution eau/glycol à 50 % /50 % pendant une durée de 3000 h, on a vérifié que les propriétés en traction (mesurées à 23° C) et en particulier les propriétés à la rupture de la composition I2 étaient améliorées par rapport à celles de la composition C1 (voir la courbe de I2 traduisant des contraintes moindres pour des déformations données, à partir de 80 % de déformation relative, par rapport aux contraintes appliquées à la composition C1 pour ces mêmes déformations, et des contraintes maximales supérieures pour I2 par rapport à C1 aux plus hautes déformations).

Comme illustré à la figure 11, après un vieillissement thermique par de l'air à 120° C pendant une durée de 3000 h, on a vérifié que les propriétés en traction (mesurées à 23° C) et en particulier les propriétés à la rupture de la composition I2 étaient également améliorées par rapport à celles de la composition C1 (voir la courbe de I2 traduisant des contraintes moindres pour des déformations données, à partir de 30 % de déformation relative, par rapport aux contraintes appliquées à la composition C1 pour ces mêmes déformations, et des contraintes maximales supérieures pour I2 par rapport à C1 aux plus hautes déformations).

En conclusion, les compositions I1 et I2 selon l'invention, qui sont notamment caractérisées en ce qu'elles comprennent une polyoléfine durable (e.g. un polypropylène recyclé) selon une fraction massique supérieure à 30 %, voire supérieure à 40 % (composition I2), et donc présentent une empreinte carbone réduite par rapport à la composition de référence (empreinte carbone diminuée de 29 % pour la composition I1 et de 30% pour la composition I2), présentent une résistance au vieillissement thermique analogue et même améliorée (cf. composition I2) par rapport à la composition C1, tant au contact d'un fluide glycolé que de l'air, ce qui démontre l'aptitude et même la supériorité des compositions selon l'invention pour constituer notamment un tuyau monocouche ou bien les couches interne et/ou externe d'un tuyau multicouche pour un circuit de refroidissement d'une batterie ou d'un moteur électrique d'un véhicule automobile.

On notera que cette résistance au vieillissement thermique analogue et même améliorée pour les compositions selon l'invention est notamment rendue possible par le système antioxydant mixte précité, comprenant un premier antioxydant de préférence aromatique hétérocyclique et un deuxième antioxydant à base d'un thioéther, en plus des autres ingrédients des compositions de l'invention.

On notera également que, comme les compositions de l'invention sont dépourvues d'oxyde de zinc, elles n'interagissent avantageusement pas avec le système antirouille utilisé dans le circuit de refroidissement, lequel système antirouille n'est ainsi pas inhibé et assure pleinement sa fonction de protection.

### Préparation des compositions selon l'invention 13 à I5 :

Les compositions I3 à I5 selon l'invention ont été préparées selon le protocole décrit ci-dessus. La teneur en Polypropylène (PP) à fractions recyclée (rPP) et vierge (vPP) a été variée dans les différentes compositions. Le tableau 3 suivant détaille la formulation des compositions I3 à I5 (en parties en poids de chaque ingrédient dans la composition) qui ont été préparées.

**[Tableau 3]**

| **Ingrédients** | | **I3** | **I4** | **I5** |
|---|---|---|---|---|
| EPDM à taux massiques d'éthylène de 44 %, d'ENB de 9 %, et à ML(1+4) à 125° C de 63 | | 60 | 60 | 60 |
| Polypropylène (PP) à fractions recyclée (rPP) et vierge (vPP): | | 80 | 120 | 210 |
| PCR à 70 % mass. de PP recyclé « rPP1002 » | | | | |
| Agent réticulant : bis-alkylperoxyde | | 2,4 | 2,4 | 2,4 |
| Co-agent réticulant : à base acrylate | | 1,2 | 1,2 | 1,2 |
| Agent de mise en œuvre : PEG | | 5 | 5 | 5 |
| Noir de carbone : de série ASTM N500 | | 22 | 22 | 22 |
| Plastifiant : huile minérale de formule [Chem. 1] ci-dessus | | 24,8 | 24,8 | 24,8 |
| Antioxydants | Amine aromatique de formule [Chem. 2] | 1,5 | 1,5 | 1,5 |
| | alkyl-dihydroquinoline | 1 | 1 | 1 |
| | Thioéther : distéaryl-disulfure | 1 | 1 | 1 |

Les fractions massiques de rPP et de vPP sont les suivantes :
- dans la composition I3 : environ 28 % de rPP et 12 % de vPP,
- dans la composition I4 : environ 35 % de rPP et 15 % de vPP,
- dans la composition I5 : environ 50 % de rPP et 20 % de vPP.

On a procédé à des essais de traction uni-axiale à 23° C selon la norme ISO 37:2017 d'éprouvettes H2 constituées des compositions I3, I4 et I5, à l'état initial (i.e. avant toute exposition des compositions aux fluides et conditions opératoires caractérisant leur fonctionnement), dont les résultats sont visibles aux courbes contraintes/ déformations de la figure 12.

Comme illustré à la figure 12, les résultats montrent que les compositions selon l'invention présentent une contrainte et un allongement à la rupture satisfaisants.

## Revendications

1. Composition élastomère thermoplastique en particulier utilisable dans un tuyau monocouche (1) ou multicouche (10, 20, 30, 40) d'un circuit de refroidissement d'une batterie ou d'un moteur électrique d'un véhicule automobile électrique ou hybride, la composition comprenant :
(i) au moins un élastomère,
(ii) au moins une polyoléfine comprenant
- une partie polyoléfinique recyclée issue d'un matériau polyoléfinique post-industriel (PIR) ou post-consommation (PCR), ou d'un broyage suivi d'une régénération d'un matériau polyoléfinique dans une extrudeuse, et
- optionnellement une partie polyoléfinique vierge,
(iii) une charge renforçante comprenant un noir de carbone,
(iv) un système plastifiant comprenant au moins une huile plastifiante et/ou au moins une résine plastifiant, et
(v) un système antioxydant comprenant plusieurs antioxydants, dont un antioxydant à base d'un thioéther,
dans laquelle la composition comprend, en fractions massiques :
- plus de 35 % de ladite au moins une polyoléfine, et
- moins de 30 % dudit système plastifiant.

2. Composition selon la revendication 1, dans laquelle la composition comprend ladite partie polyoléfinique recyclée selon une fraction massique supérieure à 25 %, de préférence inclusivement comprise entre 28 % et 50 %, par exemple entre 30 % et 45 %.

3. Composition selon la revendication 1 ou 2, dans laquelle la composition comprend ladite partie polyoléfinique vierge selon une fraction massique supérieure à 10 %, de préférence inclusivement comprise entre 15 % et 35 %.

4. Composition selon la revendication 3, dans laquelle la composition comprend ladite partie polyoléfinique recyclée et ladite partie polyoléfinique vierge selon une fraction massique totale inclusivement comprise entre 40 % et 70 %, de préférence entre 50% et 68 %, par exemple entre 55 % et 65 %.

5. Composition selon une des revendications précédentes, dans laquelle la composition comprend ledit système plastifiant selon une fraction massique inclusivement comprise entre 3 % et 25 %, de préférence entre 4 % et 15 % et par exemple entre 5 % et 12 %.

6. Composition selon une des revendications précédentes, dans laquelle ladite au moins une polyoléfine comprend :
- un homopolymère d'au moins une alpha-oléfine, par exemple le propylène, ou
- un interpolymère de l'éthylène et d'au moins une alpha-oléfine, par exemple le propylène,
ladite partie polyoléfinique recyclée comprenant de préférence un homopolymère ou un copolymère de propylène recyclé issu d'un matériau polyoléfinique recyclé de type post-industriel (PIR) ou post-consommation (PCR),
et par exemple dans laquelle ladite partie polyoléfinique recyclée et ladite partie polyoléfinique vierge comprennent respectivement, indépendamment l'une de l'autre :
- un homopolymère ou copolymère du propylène (PP) recyclé, selon une fraction massique dans ladite au moins une polyoléfine inclusivement comprise entre 50 % et 100 %, et
- un homopolymère ou copolymère du propylène (PP) vierge, selon une fraction massique dans ladite au moins une polyoléfine inclusivement comprise entre 0 % et 50 %.

7. Composition selon la revendication 6, dans laquelle la composition est un vulcanisat thermoplastique (TPV), ledit au moins un élastomère étant choisi parmi
- des EPDM,
- des homopolymères ou copolymères du butadiène et/ou de l'isoprène, et optionnellement en outre d'un comonomère vinylaromatique, d'acrylonitrile ou d'une alpha-oléfine ramifiée,
- des copolymères d'éthylène et d'au moins une alpha-oléfine linéaire ou ramifiée ayant de 3 à 20 atomes de carbone, et
- des caoutchoucs acryliques de type polyacrylates (ACM) ou polyacrylates d'éthylène (AEM),
de préférence dans laquelle ledit au moins un élastomère est choisi parmi les terpolymères éthylène-propylène-diène (EPDM), les caoutchoucs butyle (IIR) et les copolymères éthylène-octène (POE), et
de préférence dans laquelle la fraction massique dudit au moins un élastomère dans la composition est inclusivement comprise entre 10 % et 40 %.

8. Composition selon la revendication 7, dans laquelle la composition comprend un système de réticulation qui est dépourvu de résine phénolique et d'oxyde de zinc et qui comprend de préférence un peroxyde organique à titre d'agent de réticulation et un coagent de réticulation choisi parmi le triallyl cyanurate (TAC), le triallyl isocyanurate (TAIC), et les coagents à base acrylate tels que l'éthylène glycol diméthacrylate (EGDMA).

9. Composition selon la revendication 7 ou 8, dans laquelle ledit au moins un élastomère est un terpolymère éthylène-propylène-diène (EPDM) dont l'éthylène est optionnellement biosourcé, et
de préférence dans laquelle la fraction massique dudit au moins un élastomère dans la composition est inclusivement comprise entre 15 % et 25 %.

10. Composition selon une des revendications précédentes, dans laquelle ledit noir de carbone est optionnellement recyclé au moins en partie, et est par exemple de série ASTM N500 ou N600, ledit noir de carbone étant présent dans la composition selon une fraction massique inclusivement comprise entre 1 % et 15%, de préférence entre 4 % et 10 %.

11. Composition selon une des revendications précédentes, dans laquelle ledit système antioxydant comprend :
- un premier antioxydant de préférence aromatique hétérocyclique, par exemple à base de 2,2,4-triméthyl-1,2-dihydroquinoline polymérisée, et
- un deuxième antioxydant à base dudit thioéther, par exemple le distéaryl-disulfure, et de préférence dans laquelle ledit système antioxydant comprend en outre un troisième antioxydant à base d'une amine aromatique.

12. Composition selon les revendications 9, 10 et 11, dans laquelle la composition formant ledit vulcanisat thermoplastique (TPV) comprend une phase continue comprenant ladite au moins une polyoléfine, et une phase discontinue comprenant des nodules dudit au moins un élastomère qui sont dispersés dans ladite au moins une polyoléfine, et
dans laquelle la composition présente une contrainte et un allongement à la rupture, mesurés en traction uni-axiale selon la norme ISO 37:2017 après des vieillissements pendant 3000 h à 120° C au contact d'air et d'eau glycolée, respectivement, qui sont supérieurs à la contrainte et à l'allongement à la rupture d'une composition de vulcanisat thermoplastique de référence où ladite au moins une polyoléfine, dépourvue de partie polyoléfinique recyclée, est constituée d'un homopolymère du propylène (PP) vierge.

13. Composition selon une des revendications précédentes, dans laquelle ladite au moins une huile plastifiante est choisie parmi les huiles minérales, les huiles biosourcées issues de la biomasse telles que des huiles végétales modifiées ou non, et leurs mélanges, et par exemple dans lequel ladite au moins une huile plastifiante est choisie parmi des huiles minérales paraffiniques, naphténiques et aromatiques.

14. Article élastomère ou composite élastomère-textile ou métal, en particulier choisi parmi les tuyaux monocouche (1), les tuyaux multicouche (10, 20, 30, 40) optionnellement renforcés par une armature textile (12, 23, 32, 34, 44), les joints d'étanchéité pour véhicules à moteur ou pour bâtiments, les dispositifs antivibratoires et les éléments de support, de calage ou protection pour packs de batterie ou pour centres de traitement de données,
dans lequel l'article comprend ou est constitué d'un extrudat formé d'une composition selon une des revendications précédentes.

15. Article selon la revendication 14, dans lequel l'article est un tuyau monocouche (1) ou multicouche (10, 20, 30, 40) extrudé pour un circuit de refroidissement d'une batterie ou d'un moteur électrique d'un véhicule automobile électrique ou hybride, et de préférence dans lequel
l'article est un tuyau monocouche (1) qui est constitué de ladite composition et qui est utilisable pour véhiculer un fluide de refroidissement d'une batterie à une pression d'au plus 3,0. 10⁵ Pa et à une température d'au plus 120° C.
